Europäisches Patentamt

European Patent Office

Office européen des brevets

(19)

(11) Veröffentlichungsnummer: **0 002 769**
**B1**

(12)

# EUROPÄISCHE PATENTSCHRIFT

(45) Veröffentlichungstag der Patentschrift:
**07.10.81**

(51) Int. Cl.³: **C 02 F 3/12,** C 02 F 11/02

(21) Anmeldenummer: **78101742.1**

(22) Anmeldetag: **18.12.78**

(54) **Verfahren zur biologischen Reinigung von Abwasser.**

(30) Priorität: **23.12.77 DE 2757742**

(43) Veröffentlichungstag der Anmeldung:
**11.07.79 Patentblatt 79/14**

(45) Bekanntmachung des Hinweises auf die Patenterteilung:
**07.10.81 Patentblatt 81/40**

(84) Benannte Vertragsstaaten:
**BE CH FR IT NL**

(56) Entgegenhaltungen:
**DE-A-2 447 501**
**DE-A-2 652 229**
**US-A-2 227 851**
**US-A-3 356 609**
**US-A-3 673 083**

(73) Patentinhaber: **Linde Aktiengesellschaft,**
**Abraham-Lincoln-Strasse 21, D-6200 Wiesbaden (DE)**

(72) Erfinder: **Gregor, Carl-Heinz, Dr., Kirchenstrasse 65/V,**
**D-8034 Germering (DE)**
Erfinder: **Reimann, Hans, Dr., Rudolf-Wilke-Weg 21,**
**D-8000 München 71 (DE)**
Erfinder: **Wildmoser, Alfred, Flurstrasse 12, D-8013 Haar**
**(DE)**

(74) Vertreter: **Schaefer, Gerhard, Dr., Linde**
**Aktiengesellschaft Zentrale Patentabteilung,**
**D-8023 Höllriegelskreuth (DE)**

## Verfahren zur biologischen Reinigung von Abwasser

Die Erfindung betrifft ein Verfahren zur biologischen Reinigung von Abwasser unter Verwendung wenigstens eines Belebungsbeckens und einer Nachklärung mit Schlammrückführung in das Belebungsbecken, bei dem sich durch Vermehrung bestimmter Mikroorganismen unerwünschter Blähschlamm bildet und die den Blähschlamm verursachenden Mikroorganismen mechanisch zerstört werden.

Bekanntlich wird als Blähschlamm schlecht absetzbarer belebter Schlamm mit geringem Feststoffgehalt bezeichnet, der infolge einer übermässigen Entwicklung bestimmter Mikroorganismen gebildet wird, die keine normale Belebtschlammflocke ausbilden. Hierzu gehören vor allem fadenbildende Bakterien und Algen, aber auch Bakterien mit dicken Schleimhüllen u.a.m. Nach bisheriger Kenntnis wird das Wachstum solcher Mikroorganismen vor allem durch bestimmte Abwasserinhaltsstoffe, wie Kohlenhydrate, organische Säuren oder Schwermetalle u.a. gefördert. Auch der Mangel an bestimmten Spurennährstoffen kann in dieser Weise wirken. Beim Auftreten solcher anomaler Belebtschlämme bewirkt die geringe Sinkgeschwindigkeit des Feststoffes die schlechte Absetzbarkeit des Blähschlammes, die in der Nachklärung zu Schwierigkeiten bei der Trennung des in der biologischen Stufe gereinigten Abwassers von dem Belebtschlamm führt. Es besteht dann die Gefahr, dass der Belebtschlamm nicht mehr durch Einwirkung der natürlichen Schwerkraft sedimentiert und statt dessen in den Vorfluter abtreibt. Dadurch wird aber nicht nur der Vorfluter belastet, sondern auch der biologischen Abwasserreinigungsanlage biologisch aktive Substanz, die zur biologischen Reinigung der Abwasserinhaltsstoffe notwendig ist, entzogen.

Da es bei Abwässern insbesondere der Nahrungsmittelindustrie nicht immer möglich ist, das Nährstoffangebot und die Belastung einer zur biologischen Reinigung der Abwässer eingesetzten Belebungsanlage so auszubalancieren, dass die Entwicklung der den Blähschlamm hervorrufenden Mikroorganismen von vornherein unterbunden werden kann, wird in diesem Fall dem Auftreten von Blähschlamm bisher dadurch begegnet, dass entweder besonders grosse Nachklärbecken installiert werden, die der geringen Sinkgeschwindigkeit des Blähschlammes Rechnung tragen, oder Fällungs- und/oder Flockungsmittel zugesetzt weren, die den Blähschlamm beschweren und zur Flockung bringen. Bei den häufig auftretenden Fadenbildnern wird versucht, durch Zusatz bestimmter Chemikalien, wie Chlor oder Wasserstoffperoxid, diese Fadenbildner im Blähschlamm selektiv zu zerstören.

Der Nachteil des ersteren Verfahrens ist jedoch, dass die nach langer Aufenthaltszeit in der Nachklärung abgesetzten oder ausgeflockten, den Blähschlamm bildenden Mikroorganismen zum grossen Teil im Kreislauf über den Rücklaufschlamm der Nachklärung zusammen mit in der Belebungsstufe neugebildeten gleichartigen Mikroorganismen wieder zugeführt werden und aufs neue die Sedimentation des Belebtschlammes in der Nachklärung behindern. Das Wachstum der den Blähschlamm bildenden Mikroorganismen bleibt bei diesem Verfahren unberührt. Die selektive Vergiftung durch Chemikalien ist schwer zu steuern und nur bei den empfindlicheren Arten von Fadenbildnern überhaupt unwirksam.

Die US-A-2 227 851 beschreibt zwar ein Verfahren zum Eindicken von Schlamm, bei dem in einem Belüftungsbecken das Wachstum von Mikroorganismen in der Weise gefördert wird, dass sich organische Inhaltsstoffe besonders schnell abbauende fadenförmige Mikroorganismen entwickeln, und bei dem der aus dem Belüftungsbecken abgeleitete Schlamm mit Hilfe einer Art Düsenzentrifuge konzentriert wird. Dabei wird der in der Düsenzentrifuge eingedickte Schlamm aus der Anlage ausgetragen und die anfallende Flüssigkeit in das Belüftungsbecken zurückgeleitet. Mit dem Schlammaustrag aus der Anlage handelt es sich jedoch um eine reine Schlammkonzentrierung, bei der zwar die fadenförmigen Mikroorganismen in der Düsenzentrifuge zerstört werden, bei der aber das Wachstum von Blähschlamm bildenden Mikroorganismen im Belüftungsbecken nicht behindert und damit die Ausbildung von Blähschlamm nicht vermieden wird.

Des weiteren zeigt die DE-A-2 447 501 ein Verfahren zur Abwasserreinigung, bei dem das Abwasser durch ein Belebungsbecken und anschliessend durch eine maschinelle Schlammentwässerungsvorrichtung geleitet wird, wobei der Filtratablauf der maschinellen Schlammentwässerungsvorrichtung an ein Nachklärbecken angeschlossen ist und der Schlammablauf der maschinellen Schlammentwässerungsvorrichtung zum Belebungsbecken zurückgeleitet wird. Damit ist die maschinelle Schlammentwässerungsvorrichtung der Nachklärung eindeutig vorgeschaltet, wobei diesem Verfahren einzig die Aufgabe zugrundeliegt, den Aufwand hinsichtlich der maschinellen Schlammabtrennung so gering wie möglich zu halten, was durch Nachschaltung eines Nachklärbeckens und unter Durchführung einer Teilentwässerung des Schlamms in der maschinellen Schlammentwässerungsvorrichtung erreicht werden soll.

Der Erfindung liegt die Aufgabe zugrunde, ein Verfahren zur biologischen Reinigung von Abwasser der eingangs genannten Art zu entwickeln, mit dem unabhängig vom Nährstoffangebot und vom Belastungsfall der Belebungsanlage das Wachstum von Blähschlamm bildenden Mikroorganismen auf einfache Weise sicher behindert und damit die Ausbildung von Blähschlamm vermieden werden kann.

Diese Aufgabe wird erfindungsgemäss dadurch gelöst, dass die mechanische Zerstörung

2

der den Blähschlamm verursachenden Mikroorganismen nach der Nachklärung durchgeführt wird.

Mit der Durchführung der mechanischen Zerstörung der den Blähschlamm verursachenden Mikroorganismen nach der Nachklärung wird erreicht, dass nur die Menge des von der Nachklärung zum Belebungsbecken zurückgeführten Rücklaufschlamms, von dem das aus dem Nachklärbecken abgeleitete Klarwasser und der Überschussschlamm bereits abgetrennt sind, behandelt werden muss und nicht die Menge des gesamten, fadenförmige Mikroorganismen enthaltenden Flüssigkeits-Schlammgemisches des Belebungsbeckens. Das Volumen des zu behandelnden Flüssigkeits-Schlammgemisches beträgt dann nur noch etwa die Hälfte des Flüssigkeits-Schlammgemisches, das vor der Nachklärung verarbeitet werden müsste. Dementsprechend können bei dem erfindungsgemässen Verfahren verhältnismässig kleine Einrichtungen zur Durchführung der mechanischen Zerstörung von Blähschlamm bildenden Mikroorganismen eingesetzt werden. Abgesehen davon wird mit der Anordnung der mechanischen Zerstörung nach der Nachklärung auch eine einwandfreie Trennung des Belebtschlammes vom gereinigten Abwasser in der Nachklärung erreicht, da aufgrund der Zerstörung der fadenförmigen Mikroorganismen im Rücklaufschlamm diese zur Bildung von Blähschlamm im Belebungsbecken nicht mehr zur Verfügung stehen und damit die Blähschlammbildung im Belebungsbecken behindert wird.

Vorteilhaft ist es dabei, die Durchführung der mechanischen Zerstörung des Blähschlamms unter Einbeziehung des Rücklaufschlamms und des Schwimmschlamms der Nachklärung erfolgen zu lassen und den bei der mechanischen Zerstörung anfallenden eingedickten Schlamm dem Belebungsbecken und das anfallende Klarwasser dem Vorfluter und/oder dem Belebungsbecken zuzuleiten. Auf diese Weise ist es möglich, alle im Kreislauf des Belebtschlammes enthaltenen, den Blähschlamm bildenden Mikroorganismen zu erfassen.

Zur Erzielung der mechanischen Zerstörung der den Blähschlamm bildenden Mikroorganismen ist es des weiteren vorteilhaft, den Blähschlamm hohen Beschleunigungskräften auszusetzen. Diese können nach einer vorteilhaften Weiterbildung des Erfindungsgedankens auf einfache Weise durch Zentrifugieren des Blähschlamms erzeugt werden, wobei die Zentrifugen mit Drehzahlen bis zu 8000 U/min betrieben werden und wobei der Blähschlamm einer Beschleunigung ausgesetzt wird, die einer Fallbeschleunigung bis 800 g entspricht. Mit der Erzeugung von künstlichen Schwerefeldern, beispielsweise in Separatoren oder Dekanterzentrifugen, werden dann die den Blähschlamm bildenden Mikroorganismen hohen Scherkräften ausgesetzt, die ein Auseinanderreissen und Zerkleinern der Mikroorganismen bewirken. Bei fadenförmigen Bakterien z.B. werden dabei nicht nur die Fadenknäuel auseinandergerissen, sondern auch die einzelnen Fäden in kleine Stücke zerrissen, wodurch die Sedimentationsfähigkeit des Belebtschlammes in der Nachklärung dann nicht mehr behindert ist.

Um die Sinkgeschwindigkeit vorhandenen Blähschlamms erhöhen zu können, ist es weiterhin vorteilhaft, beispielsweise dem Belebungsbecken oder auch nach dem Belebungsbecken Fällungs- und/oder Flockungsmittel zuzusetzen, die die Absetzeigenschaften des Schlammes verbessern, und dadurch die Erfassung und Zuleitung der den Blähschlamm bildenden Mikroorganismen beispielsweise zu einer Zentrifuge zu erleichtern.

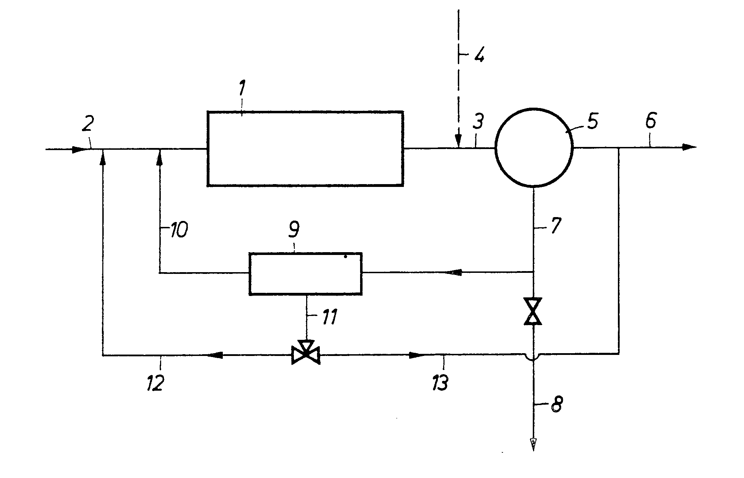

In der Figur ist schematisch eine zur Durchführung des erfindungsgemässen Verfahrens geeignete Belebungsanlage dargestellt.

Die Figur zeigt ein ein- oder mehrstufig ausgebautes Belebungsbecken 1, das einen Zulauf 2 für ein zu reinigendes Abwasser und einen Ablauf 3 aufweist. Je nach Art der Belebungsanlage kann das Abwasser-Belebtschlammgemisch im Belebungsbecken mit Luft, reinem Sauerstoff oder mit Sauerstoff angereicherter Luft begast werden. Der Ablauf 3, an den eine Zufuhrleitung 4 für Fällungs- und/oder Flockungsmittel angeschlossen sein kann, steht mit einem Nachklärbecken 5 in Verbindung, das seinerseits einen Ablauf 6 zu einem Vorfluter für gereinigtes Abwasser und eine Ableitung 7 für eingedickten Schlamm aufweist. Die Ableitung 7, die eine absperrbare Abzweigung 8 für das Abziehen von Überschussschlamm aus der Belebungsanlage aufweist, führt zu einer Zentrifuge 9, z.B. einem Separator oder Dekanter. Das Nachklärbecken 5 kann ausserdem über einen weiteren nicht dargestellten Ablauf an die Zentrifuge 9 angeschlossen sein, über den der im Nachklärbecken 5 anfallende und von einem Schwimmschlammräumer gesammelte Schwimmschlamm der Zentrifuge 9 zugeführt werden kann. Die Zentrifuge 9 steht zum einen über eine Verbindungsleitung 10 mit dem Zulauf 2 des Belebungsbeckens 1 zur Überleitung von eingedicktem Schlamm in Verbindung, während zum anderen der Klarwasserablauf 11 der Zentrifuge 9 über eine Leitung 12 ebenso an den Zulauf 2 des Belebungsbeckens 1 und über eine weitere Leitung 13 an den Ablauf 6 des Nachklärbeckens 5 zum Vorfluter angeschlossen ist.

Die im Belebungsbecken 1 aufgrund eines unausgewogenen Nährstoffangebots heranwachsenden, den Blähschlamm bildenden Mikroorganismen gelangen zusammen mit dem das Belebungsbecken 1 über den Ablauf 3 verlassenen Abwasser-Belebtschlammgemisch in das Nachklärbecken 5. Im Nachklärbecken 5 schwimmt dann der Blähschlamm teils auf, teils sinkt er je nach Zugabe von Fällungs- oder Flockungsmitteln über die Leitung 4 langsam oder schnell zu Boden. Da jedoch der Rücklaufschlamm über die Ableitung 7 des Nachklärbeckens 5 ebenso wie der Schwimmschlamm mit Hilfe des Schwimmschlammräumers und dem diesen zugeordneten Ablauf der Zentrifuge 9 zugeleitet wird, ist sichergestellt, dass alle im Nachklärbecken 5 vorhandenen den Blähschlamm bildenden Mikroorganismen in die Zentrifuge 9 gelangen, wo sie aufgrund der auftretenden Beschleunigungskräfte zerstört werden. Der in der Zentrifuge 9 eingedickte Schlamm kann dann ohne Bedenken in das Belebungsbecken 1 zurückgeleitet werden. Ein Teil des Klarwasserablaufs der Zentrifuge 9 wird zur Verdünnung des Abwasser-Belebtschlamm-Gemisches im Belebungsbecken 1 herangezogen, während der restliche Teil dem Ablauf 6 des Nachklärbeckens 5 zum Vorfluter zugeführt wird.

**Patentansprüche**

1. Verfahren zur biologischen Reinigung von Abwasser unter Verwendung wenigstens eines Belebungsbeckens und einer Nachklärung mit Schlammrückführung in das Belebungsbecken, bei dem sich durch Vermehrung bestimmter Mikroorganismen unerwünschter Blähschlamm bildet und die den Blähschlamm verursachenden Mikroorganismen mechanisch zerstört werden, dadurch gekennzeichnet, dass die mechanische Zerstörung der den Blähschlamm verursachenden Mikroorganismen nach der Nachklärung durchgeführt wird.

2. Verfahren nach Anspruch 1, dadurch gekennzeichnet, dass die Durchführung der mechanischen Zerstörung des Blähschlamms unter Einbeziehung des Rücklaufschlamms und des Schwimmschlamms der Nachklärung erfolgt und der bei der mechanischen Zerstörung anfallende eingedickte Schlamm dem Belebungsbecken und das anfallende Klarwasser dem Vorfluter und/oder dem Belebungsbecken zugeleitet wird.

3. Verfahren nach Anspruch 1 oder 2, dadurch gekennzeichnet, dass der Blähschlamm hohen Beschleunigungskräften ausgesetzt wird.

4. Verfahren nach Anspruch 3, dadurch gekennzeichnet, dass die Beschleunigungskräfte durch Zentrifugieren des Blähschlamms erzeugt werden, wobei die Zentrifugen mit Drehzahlen bis zu 8000 U/min betrieben werden und wobei der Blähschlamm einer Beschleunigung ausgesetzt wird, die einer Fallbeschleunigung bis 8000 g entspricht.

5. Verfahren nach einem der Ansprüche 1 bis 4, dadurch gekennzeichnet, dass Fällungs- und/oder Flockungsmittel zugesetzt werden.

**Claims**

1. A process for the biological purification of waste liquor using at least one activating tank and a secondary clarification with sludge recirculation to the activating tank, wherein, as a result of the multiplication of specific micro-organisms undesirable bulking sludge is formed and wherein the micro-organisms which cause the bulking sludge are mechanically destroyed, characterised in that the mechanical destruction of the micro-organisms which produce the bulking sludge is carried out after the secondary clarification.

2. A process as claimed in Claim 1, characterised in that the mechanical destruction of the bulking sludge is carried out together with the recycling sludge and the scum from the secondary clarification, and that the thickened sludge which is produced by the mechanical destruction is supplied to the activating tank and the clear water produced is supplied to the drain and/or to the activating tank.

3. A process as claimed in Claim 1 or 2, characterised in that the bulking sludge is subjected to high acceleration forces.

4. A process as claimed in Claim 3, characterised in that the acceleration forces are produced by centrifuging the bulking sludge, the centrifuges being operated at speeds up to 8000 revolutions per minute and the bulking sludge being exposed to an acceleration which corresponds to an acceleration due to gravity of up to 8000 g.

5. A process as claimed in one of Claims 1 to 4, characterised in that precipitants and/or flocculents are added.

**Revendications**

1. Procédé de purification des eaux résiduaires avec utilisation d'au moins un bassin d'activation et d'une zone de post-clarification comportant un recyclage des boues dans le bassin d'activation, procédé dans lequel la prolifération de certains micro-organismes entraîne la formation indésirable de boues gonflantes et dans lequel les micro-organismes provoquant la formation des boues gonflantes sont détruits mécaniquement, caractérisé en ce que la destruction mécanique des micro-organismes formant les boues gonflantes est effectuée après la post-clarification.

2. Procédé selon la revendication 1, caractérisé en ce qu'on effectue la destruction mécanique des boues gonflantes en traitant les boues de recyclage et les boues flottantes de la post-clarification et en ce qu'on introduit dans le bassin d'activation les boues épaissies obtenues lors de la destruction mécanique, cependant qu'on introduit l'eau purifiée obtenue dans le canal de dérivation et/ou dans le bassin d'activation.

3. Procédé selon la revendication 1 ou 2, caractérisé en ce qu'on soumet les boues gonflantes à l'action de forces d'accélération importantes.

4. Procédé selon la revendication 3, caractérisé en ce qu'on crée les forces d'accélération par une centrifugation des boues gonflantes dans laquelle les centrifugeuses sont entraînées à une vitesse de rotation atteignant jusqu'à 8000 tr/min et dans laquelle les boues gonflantes sont soumises à une force d'accélération correspondant à une force de gravité atteignant jusqu'à 8000 g.

5. Procédé selon l'une quelconque des revendications 1 à 4, caractérisé en ce que l'on ajoute des agents de précipitation et/ou de floculation.